# EUROPEAN PATENT SPECIFICATION

(11) **EP 2 070 981 B1**
(45) Date of publication and mention of the grant of the patent: **29.02.2012**
(21) Application number: 07807574.4
(22) Date of filing: 19.09.2007
(51) Int. Cl.: C08L 27/12, C08K 3/34, C08K 9/02

(54) **FLUORORUBBER COMPOSITION, CROSSLINKED FLUORORUBBER, PROCESS FOR PRODUCTION OF THE SAME, AND CROSSLINKED FLUORORUBBER FOR O-RINGS**
FLUORKAUTSCHUKZUSAMMENSETZUNG, VERNETZTER FLUORKAUTSCHUK, HERSTELLUNGSVERFAHREN DAFÜR UND VERNETZTER FLUORKAUTSCHUK FÜR O-RINGE
COMPOSITION DE CAOUTCHOUC FLUORÉ, CAOUTCHOUC FLUORÉ RÉTICULÉ, PROCÉDÉ POUR LA PRODUCTION DE CELUI-CI ET CAOUTCHOUC FLUORÉ RÉTICULÉ POUR JOINTS TORIQUES

(30) Priority: 26.09.2006 JP 2006260552
(43) Date of publication of application: 17.06.2009
(73) Proprietor: NOK Corporation, Minato-ku Tokyo 105-8585 (JP)
(72) Inventor: SANO, Hiroyuki, Fujisawa-shi Kanagawa 251-0042 (JP)
(74) Representative: Gulde Hengelhaupt Ziebig & Schneider
(86) International application number: PCT/JP2007/068205
(87) International publication number: WO 2008/038555

(56) References cited:
- EP-A1- 0 600 090
- WO-A1-2008/063905
- JP-A- 07 258 337
- JP-A- 08 081 629
- JP-A- 2005 539 115
- US-A1- 2006 148 954
- US-B1- 6 303 699
- US-B1- 6 303 699

## Description

### Technical Field

The present invention relates to a low-temperature- and heat-resistant, colorable fluororubber composition, a crosslinked fluororubber product, a process for producing the crosslinked fluororubber product, and a crosslinked fluororubber product for O-rings. More particularly, the invention relates to a fluororubber composition capable of preventing deposition of talc during extrusion, a crosslinked fluororubber product, a process for producing the crosslinked fluororubber product, and a crosslinked fluororubber product for O-rings.

### Background Art

Fluororubber possesses excellent oil and heat resistance, and is therefore used in a wide range of applications, such as, for example, O-rings used in combustion systems of automobiles.

Fluororubber, however, generally has a higher glass transition point than those of other elastomeric materials. Therefore, at temperatures equal to or lower than the glass transition point, fluororubber is completely vitrified and cannot serve as a rubber material. Fluororubber thus has the drawback of poor resistance to low temperatures. For this reason, a fluororubber having excellent resistance to oil and heat, as well as excellent resistance to low temperatures, is desired.

In recent years, "Viton GLT" (trade name), manufactured by DuPont, has attracted attention as a fluororubber having excellent resistance to fuel oil and low temperatures, as well as resistance to low temperatures. These fluororubbers are typically carbon-containing black fluororubbers (Patent Document 1); however, owing to the recent market demands for differentiation, there is a tendency toward a growing demand for colored fluororubbers.

Naturally, however, carbon cannot be added when coloring a fluororuber. The heat resistance and reinforcing properties generally deteriorate without the addition of carbon. The deterioration of the reinforcing properties in colored fluororubbers is currently compensated for by adding a white filler, such as talc, barium sulfate.

On the other hand, the preparation of green stock (controlling the thickness) is important when molding products that require dimensional accuracy, such as O-rings. When preparing green stock for these applications, the thickness of the green stock cannot be controlled in the preparation of green stock using an open roll mill. Therefore, the preparation of green stock using a green stock extruder has recently become mainstream.

With black fluororubbers (containing carbon), the preparation of green stock using an extruder did not cause any particular problem; however, owing to the recent increased demand for colored rubbers, the following problem that was not previously observed have become apparent.

The problem was that, during extrusion, the talc component contained in a heat- and low-temperature-resistant, colorable fluororubber was deposited on the tip portion of the die of the extruder; one a certain amount of the talc was deposited, the talc adhered to the extruded green stock as a contaminant. Although the deposited talc is an ingredient contained in the fluororubber, if the talc is aggregated in one region, the rubber performance will naturally be deteriorated.
Patent Document 1: Japanese Patent Publication JP 100139970: black fluororubber with excellent oil resistance
Patent Document 2: Japanese Patent Publication JP 2005 053956: fluororubber with excellent resistance to oil, heat, and low temperatures

### Disclosure of the Invention

### Problem to Be Solved by the Invention

Accordingly, an object of the present invention is to solve the above-described problem of prior art, and provide a fluororubber composition that does not suffer from deposition, during extrusion, of a talc component contained in a heat- and low-temperature-resistant, colorable fluororubber, that is capable of providing products having performance equal to that of conventional mass-produced materials, and that is capable of substantially reducing the rejection rate in the preparation of green stock; and a process for producing a crosslinked fluororubber product.

Other objects of the invention will become apparent from the following description.

### Means for Solving the Problem

The above-described object is solved by each of the inventions set forth below.

The invention is a fluororubber composition comprising a fluororubbers containing a fluoropolymer that is crosslinkable with a peroxide; a peroxide crosslinking agent; and a heat-resistant filler containing a calcined talc having a hydrophilic surface the fluororubber composition containing a coloring agent and further containing carbon black at a content from 1 part by weight or less based on 100 parts by weight of fluoropolymer and a content of the calcined talc being from 2 to 20 parts by weight based on 100 parts by weight of the fluoropolymer.

The fluoropolymer that is crosslinkable with a peroxide is a low-temperature-type terfluoropolymer having a TR10 value of from -40 to -25°C.

The low-temperature-type terfluoropolymer is a vinylidene fluoride/perfluoro(methyl vinyl ether)/tetrafluoroethylene terfluoropolymer.

A process for producing a crosslinked fluororubber product, comprising kneading the fluororubber composition and subsequently heat-treating the kneaded product.

Wherein the crosslinked fluororubber product has a low-temperature resistance as defined by a TR10 value of -25°C or less, a change in hardness after 70 hours at 250°C of +5 points or less, and a change in ultimate elongation of -10% or less.

A crosslinked fluororubber product for O-rings, which is a crosslinked fluororubber product obtained by the process as defined above for use as O-rings.

### Effects of the Invention

The invention provides a fluororubber composition that does not suffer from deposition, during extrusion, of a talc component contained in a heat- and low-temperature-resistant, colorable fluororubber, that is capable of providing products having performance equal to that of conventional mass-produced materials, and that is capable of substantially reducing the rejection rate in the preparation of green stock; a crosslinked fluororubber product; a process for producing the crosslinked fluororubber product; and a crosslinked fluororubber product for O-rings.

### Brief Description of the Drawings

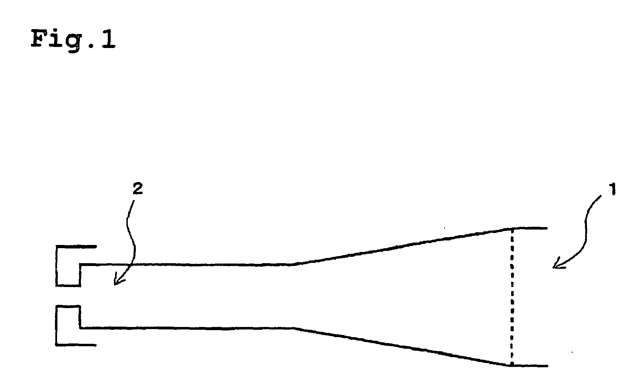

FIG. 1 shows the shape of the tip portion of an extruder.

### Explanation of Letters or Numerals

1: Body Side
2: Determination Portion at Tip Portion

### Best Mode for Carrying Out the Invention

Embodiments of the present invention are described below.

### [Fluororubber Composition]

The fluororubber composition of the invention comprises a fluororubber containing a fluoropolymer that is crosslinkable with a peroxide; a peroxide crosslinking agent; and a heat-resistant filler, which is a calcined talc having a hydrophilic surface.

### <Fluororubber>

Ternary copolymers of fluorine-containing olefins are usable as fluoropolymers that are crosslinkable with a peroxide for use in the fluororubber.

Specific examples of fluorine-containing olefins include vinylidene fluoride, hexafluoropropylene, pentafluoropropylene, trifluoroethylene, trifluorochloroethylene, tetrafluoroethylene, vinyl fluoride, perfluoroacrylate, perfluoroalkyl acrylate, perfluoromethyl vinyl ether, perfluoropropyl vinyl ether.

Preferable examples of terfluoropolymers include a vinylidene fluoride/perfluoro(methyl vinyl ether)/tetrafluoroethylene ternary copolymer (abbreviation: VdF/PMVE/TFE); a vinylidene
fluoride/hexafluoropropylene/tetrafluoroethylene ternary copolymer (abbreviation: VdF/HFP/TFE);.

These polymers can be obtained by solution polymerization, suspension polymerization, or emulsion polymerization according to conventionally known methods, and are commercially available.

In the invention, preferable commercially available products are those of the low-temperature-type; in particular, GLT-types (VdF/PMVE/TFE) manufactured by DuPont are preferable.

The term "low-temperature-type" herein refers to the type having a TR10 value of -40 to -25°C.

The "TR10 value" herein is determined as follows. In a TR test, a sample is elongated 50% and vitrified at the glass transition point (Tg) or lower, after which the temperature is gradually raised, causing the distortion to be alleviated. The temperature at which the sample has recovered 10% based on its initial ultimate elongation represents the TR10 value.

Examples of fluororubbers usable in the invention include fluororubbers having iodine and/or bromine in a molecule. When these fluororubbers are vulcanized (crosslinked) with, typically, an organic perioxide, a polyfunctional unsaturated compound represented by triallyl isocyanurate is preferably used in combination with the organic peroxide.

In the invention, the fluororubber can be suitably selected from those that meet the performance of the above-mentioned low-temperature-type.

### <Crosslinking Agent>

A peroxide crosslinking agent is used as a crosslinking agent. An organic peroxide crosslinking agent can be preferably used as a peroxide crosslinking agent.

Examples of usable organic peroxide crosslinking agents include 2,5-dimethylhexane-2,5-dihydroperoxide; 2,5-dimethyl-2,5-di(benzoylperoxy)hexane; tert-butyl peroxide; dicumyl peroxide; tert-butyl cumyl peroxide; 1,1-di(tert-butylperoxy)-3,3,5-trimethylcyclohexane; 2,5-dimethyl-2,5-di(tert-butylperoxy)hexane; 2,5-dimethyl-2,5-di(tert-butylperoxy)hexyne-3; 1,3-di(tert-butylperoxyisopropyl)benzene; tert-butylperoxy benzoate; tert-butylperoxyisopropyl carbonate; n-butyl-4,4-di(tert-butylperoxy)valerate;. These crosslinking agents can be used as purchased (for example, "Perhexa 25B-40", manufactured by NOF Corporation). Alternatively, a commercially available masterbatch containing raw rubber and a crosslinking agent may also be used as a peroxide crosslinking agent. These crosslinking agents may be used alone or in a combination of two or more.

The content of the peroxide crosslinking agent is preferably from 0.5 to 5 parts by weight, and more preferably 1 to 3 parts by weight, based on 100 parts by weight of the fluoropolymer.

### <Crosslinking Accelerator>

In the invention, zinc oxide, triallyl isocyanurate, is used as a crosslinking accelerator. Alternatively, triethanolamine, diethylene glycol, are mentioned as examples when a metal oxide such as zinc oxide, a fatty acid such as stearic acid, or a silica-based reinforcing agent is added.

In the invention, the content of the crosslinking accelerator is preferably from 1 to 10 parts by weight, and more preferably 3 to 8 parts by weight, based on 100 parts by weight of the fluoropolymer.

### <Heat-Resistant Filler>

In the invention, a calcined talc having a hydrophilic surface is used as a heat-resistant filler. The calcined talc for use in the invention is commercially available; examples of commercially available products include Enstac 24 (manufactured by Asada Milling Co., Ltd.).

In the invention, the content of the calcined talc is from 2 to 20 parts by weight, and preferably 2 to 12 parts by weight, based on 100 parts by weight of the fluoropolymer.

In the invention, if an uncalcined white talc as conventionally employed is used, the talc component is problematically deposited during extrusion.

### <Coloring Agent>

The invention aims to solve the problem with the preparation of green stock for colored fluororubbers. Preferably, the fluororubber composition of the invention is substantially free of carbon black. The expression "substantially free" herein means that the carbon black content is preferably from 1 part by weight or less, and more preferably 0.5 part by weight or less, based on 100 parts by weight of the fluoropolymer.

In the invention, examples of usable coloring agents for colored fluororubbers include iron oxide red, zinc oxide, titanium oxide, aniline black, cadmium yellow, iron oxide yellow, titan yellow, insoluble benzidine yellow, condensed azo yellow, isoindolinone yellow, benzimidazolone yellow, insoluble benzidine orange, benzimidazolone orange, perinone orange, cadmium red, monoazolate red, insoluble monoazo red, benzimidazolone red, condensed azo red, quinacridone red, perylene red, anthraquinonyl red, quinacridone violet, dioxazine violet, cobalt blue, ultramarine blue, phthalocyanine blue, insoluble benzidine blue, indanthrone blue, titanium cobalt green, chlorinated phthalocyanine green, brominated phthalocyanine green, benzimidazolone brown, aluminum.

In the invention, the content of the coloring agent is preferably from 1 to 10 parts by weight, and more preferably 4 to 8 parts by weight, based on 100 parts by weight of the fluoropolymer.

### <Other Compounding Ingredients>

In the invention, in addition to the above-mentioned ingredients, rubber compounding ingredients generally used in the rubber industry can be added to an extent such that the effects of the invention are not impaired. Examples of such ingredients include fillers such as hydrotalcite (Mg₆Al₂(OH)₁₆CO₃), calcium carbonate, magnesium carbonate, aluminium hydroxide, magnesium hydroxide, aluminium silicate, magnesium silicate, calcium silicate, potassium titanate, magnesium oxide, titanium oxide, barium sulfate, aluminum borate, glass fiber, aramid fiber, ; processing aids such as waxes, metal soaps, ; acid acceptors such as calcium hydroxide, zinc oxide, ; antioxidants; thermoplastic resins; .

### <Preparation>

The fluororubber composition of the invention containing the fluoropolymer that is crosslinkable with a peroxide may be prepared by, for example, a method in which predetermined amounts of the above-mentioned ingredients are kneaded in a general kneading machine for rubber, such as an internal mixer, e.g., an intermix, a kneader, a Banbury mixer, or an open roll mill; or by a method in which the above-mentioned ingredients are dissolved in a solvent or the like, and dispersed with a stirrer.

### [Process for Producing a Crosslinked Fluororubber Product]

### <Primary Vulcanization (Crosslinking)>

The thus-obtained fluororubber composition is heated for about 1 to about 120 minutes typically at a temperature of 140 to 230°C (primary vulcanization), using an injection molding machine, a compression-molding machine, a vulcanizing press machine, an oven. The fluororubber composition can thus be crosslinked (vulcanized) and molded.

The primary vulcanization is a process of crosslinking the fluororubber composition to such a degree that its shape can be maintained to form (preform) a certain shape. In the case of a complicated shape, the composition is preferably molded in a mold, and primary vulcanization can also be performed in an oven, such as an air heater.

### <Heat Treatment>

In the invention, heat treatment after the primary vulcanization is performed at a temperature of from 200 to 300°C, and more preferably 250 to 260°C.

The heat-treatment time is preferably from 0.1 to 48 hours, more preferably 1 to 48 hours, and still more preferably 10 to 48 hours.

The crosslinked fluororubber product of the invention obtained as a result of the heat treatment has a low-temperature resistance (a TR10 value) of -25°C or less, a heat resistance (change in hardness after 70 hours at 250°C of +5 points or less), and a change in ultimate elongation of -10% or less, and does not suffer from deposition of the talc component during extrusion of green stock.

### [Applications of the Crosslinked Fluororubber Product]

The thus-obtained crosslinked fluororubber product, which can be colored, and has excellent heat resistance and low-temperature resistance, is particularly suitable for use as O-rings.

### Examples

The effects of the present invention are demonstrated below by way of Examples of the invention.

### Example 1

### <Compounding Ingredients and Amounts Thereof>

Fluororubber ("Viton GLT305" by Du Pont ) 100 parts by weight
Barium sulfate ("B-54" by Sakai Chemical Industry Co., Ltd.) 30 parts by weight
Calcined talc ("Enstac 24" by Asada Milling Co., Ltd.) 10 parts by weight
Zinc oxide (by Seido Chemical Industry Co., Ltd.) 5 parts by weight
Fatty acid salt ("NS soap" by Kao Corp.) 1 part by weight
Iron oxide red ("Brown #401" by Resino Color Industry Co., Ltd.) 5 parts by weight
Triallyl isocyanurate ("Taic" by Nippon Kasei Chemical Co., Ltd.) 3 parts by weight
2,5-Dimethyl-2,5-di(tert-butylperoxy)hexyne-3 ("Perhexa 25B40" by NOF Corporation) 3 parts by weight

### <Evaluation Method>

### 1. Evaluation of Talc Deposition

The compounding ingredients listed above were thrown into a kneader and kneaded for 20 minutes, after which green stock was produced in bulk using an open roll mill. The green stock was sufficiently cooled and subsequently warmed with a roll mill. This procedure was performed three cycles.

Evaluation of talc deposition was performed using "Labo Plastomill", manufactured by Toyo Seiki Seisaku-Sho, Ltd. Extrusion was performed for 20 minutes at a temperature of 40 to 50°C and at 15 rpm.

FIG. 1 shows the shape of the tip portion of the extruder. In FIG. 1, reference numeral 1 denotes the body side, and reference numeral 2 denotes a determination portion at the tip portion. The tip portion was removed, and the presence or absence of a deposit on the determination portion 2 was visually observed.

Table 1 shows the results of observation. In Table 1, A represents the absence of deposit, and B represents the presence of deposit.

Table 1 reveals that no talc deposition was observed. This confirmed that the problem of talc deposition during extrusion was solved.

### 2. Evaluation of Physical Properties of the Crosslinked Fluororubber Product

### (Normal Physical Properties)

The above composition (except for the vulcanizing components) was used to prepare unvulcanized rubber sheets with a thickness of 2 mm, using a 6-inch mixing roll. The unvulcanized rubber sheets were press-cured for 60 minutes at 160°C, and subsequently oven-cured for 8 hours at 150°C, thereby producing sheet-like rubber test pieces for evaluation of normal physical properties.

These rubber test pieces were evaluated for their rubber hardness, tensile strength (MPa), and ultimate elongation (%) according to the following methods. Table 1 shows the evaluation results.
1) Rubber hardness Hs was measured according to JIS K6253, using a type A durometer.
2) Tensile strength Tb (MPa) was measured according to JIS K6251.
3) Ultimate elongation Eb (%) was measured according to JIS K6251 (measured at 23±3°C).

### (Compression set CS)

Using the above-mentioned unvulcanized composition, large test pieces in accordance with JIS K6262 were prepared by press-curing for 60 hours at 160°C and oven-curing for 8 hours at 150°C. These test pieces were evaluated for their compression set (%) after heating for 70 hours at 200°C in accordance with JIS K6262. Table 1 shows the evaluation results.

### (Ageing and Heat Resistance)

As in the evaluation of compression set, changes in normal physical properties after 70 hours at 250°C were evaluated. More specifically, a change value in rubber hardness Hs relative to the above-mentioned normal physical property was determined. Table 1 shows the result. Also, changes in tensile strength Tb and ultimate elongation Eb relative to the above-mentioned normal physical properties were determined. Table 1 shows the results.

### (Immersion Test)

Changes in normal physical properties after immersion in a fuel C (isooctane/toluene = 50/50 (vol.%)) at 100°C for 168 hours were evaluated. More specifically, a change value in rubber hardness Hs relative to the above-mentioned normal physical property was determined. Table 1 shows the result. Also, changes in tensile strength Tb and ultimate elongation Eb relative to the above-mentioned normal physical properties were determined. Table 1 shows the results.

### (Low-Temperature Resistance)

A TR 10 value was determined. Table 1 shows the result.

Table 1 reveals that the use of a calcined talc in a heat-resistant colorable fluororubber imparts excellent material physical properties (heat resistance,), as well as preventing deposition of talc, and enabling improved ease of preparation of green stock.

### Comparative Example 1

Evaluation was performed in the same manner as Example 1, except that the calcined talc in the compounding ingredients was replaced with an uncalcined talc having a hydrophobic surface ("Talc JA80R", manufactured by Asada Milling Co., Ltd.; particle size: 10 to 14 µm). Table 1 shows the results.

Table 1 reveals that deposition of talc on the determination portion was observed.

### Comparative Example 2

Evaluation was performed in the same manner as Example 1, except that the calcined talc in the compounding ingredients was replaced with an uncalcined talc having a hydrophobic surface (Talc FFR, manufactured by Asada Milling Co., Ltd.; particle size: <3.9 µm).
Table 1 shows the results.

Whether the use of a finer talc particle size can prevent the deposition was examined; Table 1, however, reveals that a talc deposit was still observed on the determination portion, as in Comparative Example 1.

### Comparative Example 3

Evaluation was performed in the same manner as Example 1, except that the calcined talc in the compounding. ingredients was replaced with a surfactant-treated talc (Talc CT110, manufactured by Asada Milling Co., Ltd.).
Table 1 shows the results.

Whether the use of a surface-treated talc can prevent the deposition was examined; Table 1, however, reveals that a talc deposit was still observed on the determination portion, as in Comparative Example 1.

**[Table 1]**

| | | Ex. 1 | Comp. Ex. 1 | Comp. Ex. 2 | Comp. Ex. 3 |
|---|---|---|---|---|---|
| Compounding ingredients | | | | Unit: Parts by Weight | |
| | Fluororubber polymer | 100 | 100 | 100 | 100 |
| | Barium sulfate | 30 | 30 | 30 | 30 |
| | Calcined talc | 10 | | | |
| | Talc (particle size: 10-14 µm) | | 10 | | |
| | Talc (particle size: <3.9 µm) | | | 10 | |
| | Surfactant-treated talc | | | | 10 |
| | Zinc oxide | 5 | 5 | 5 | 5 |
| | Fatty acid salt | 1 | 1 | 1 | 1 |
| | Iron oxide red | 5 | 5 | 5 | 5 |
| | Triallyl isocyanurate | 3 | 3 | 3 | 3 |
| | 2,5-Dimethyl-2,5-di(tert-butylperoxy)hexyne-3 | 3 | 3 | 3 | 3 |

| Normal Physical Properties | | | | | |
|---|---|---|---|---|---|
| | Rubber Hardness Hs (JIS-A) | 80 | 80 | 79 | 80 |
| | Tensile Strength Tb (MPa) | 20.6 | 19.8 | 18.8 | 21.1 |
| | Ultimate elongation Eb (%) | 280 | 290 | 300 | 270 |
| Compression Set CS (%) (200°C-70hr) | | 32 | 32 | 33 | 34 |

| Ageing and Heat Resistance (250°C-70hr) | | | | | |
|---|---|---|---|---|---|
| | Change in Rubber Hardness (Point) | +2 | +2 | +2 | +2 |
| | Change in Tensile Strength (%) | -7 | -8 | -9 | -9 |
| | Change in Ultimate Elongation (%) | -5 | -4 | -6 | -5 |

| Immersion Test (Fuel C RT-168hr) | | | | | |
|---|---|---|---|---|---|
| | Change in Rubber Hardness (Point) | -4 | -4 | -5 | -5 |
| | Change in Tensile Strength (%) | -26 | -25 | -28 | -27 |
| | Change in Ultimate Elongation (%) | -2 | -3 | -1 | -4 |
| | Change in Volume (%) | +6.2 | +6.2 | +6.0 | +6.4 |

| Low-temperature resistance | | | | | |
|---|---|---|---|---|---|
| | TR-10 | -29 | -29 | -29 | -29 |
| Evaluation of Talc Deposition | | A | B | B | B |

## Claims

1. A fluororubber composition comprising a fluororubber containing a fluoropolymer that is crosslinkable with a peroxide; a peroxide crosslinking agent; and a heat-resistant filler containing a calcined talc having a hydrophilic surface;
the fluororubber composition containing a coloring agent and further containing carbon black at a content from 1 part by weight or less based on 100 parts by weight of the fluoropolymer; and
a content of the calcined talc being from 2 to 20 parts by weight based on 100 parts by weight of the fluoropolymer.

2. The fluororubber composition according to claim 1, wherein the fluoropolymer that is crosslinkable with a peroxide is a low-temperature-type vinylidene fluoride/perfluoro(methyl vinyl ether)/tetrafluoroethylene terfluoropolymer having a TR10 value of from -40 to -25°C.

3. A process for producing a crosslinked fluororubber product, comprising preparing green stock by extruding the uncrosslinked fluororubber composition as defined in any one of claims 1 or 2 with a green stock extruder, and subsequently crosslinking the green stock.

4. The process according to claim 3, wherein the crosslinked fluororubber product has a low-temperature resistance as defined by a TR10 value of -25°C or less, a change in hardness after 70 hours at 250°C of +5 points or less, and a change in elongation of -10% or less.

5. A crosslinked fluororubber product for O-rings, which is a crosslinked fluororubber product obtained by the process as defined in claim 3 or 4 for use as O-rings.

## Patentansprüche

1. Fluorkautschuk-Zusammensetzung, umfassend einen Fluorkautschuk, der ein Fluorpolymer enthält, das mit einem Peroxid vernetzt werden kann; ein Peroxid-Vernetzungsmittel; und einen wärmebeständigen Füllstoff, der einen kalzinierten Talk mit hydrophiler Oberfläche enthält; wobei die Fluorkautschuk-Zusammensetzung ein Färbemittel und zudem Ruß mit einem auf 100 Gewichtsteile Fluorpolymer bezogenen Gehalt von 1 Gewichtsteil oder weniger enthält; und
der auf 100 Gewichtsteile Fluorpolymer bezogene Gehalt an kalziniertem Talk 2 bis 20 Gewichtsteile beträgt.

2. Fluorkautschuk-Zusammensetzung nach Anspruch 1, wobei das mit Peroxid vernetzbare Fluorpolymer ein Vinylidenfluorid/Perfluormethylvinylether/Tetrafluorethylen-Terfluorpolymer vom Niedertemperaturtyp mit einem TR10-Wert von -40 bis -25°C ist.

3. Verfahren zur Herstellung eines vernetzten Fluorkautschuk-Produkts, umfassend das Herstellen einer ungehärteten Rohmischung durch Extrudieren der unvernetzten, wie in einem der Ansprüche 1 oder 2 definierten Fluorkautschuk-Zusammensetzung mit einem Rohmischungsextruder und das anschließende Vernetzen der ungehärteten Rohmischung.

4. Verfahren nach Anspruch 3, wobei das vernetzte Fluorkautschuk-Produkt eine wie anhand eines TR10-Werts von -25°C oder weniger definierte Kältebeständigkeit, eine Änderung der Härte nach 70 Stunden bei 250°C von +5 Punkten oder weniger und eine Änderung der Dehnung von -10% oder weniger aufweist.

5. Vernetztes Fluorkautschuk-Produkt für O-Ringe, bei dem es sich um ein vernetztes Fluorkautschuk-Produkt zur Verwendung als O-Ringe handelt, das mit Hilfe des wie in Anspruch 3 oder 4 definierten Verfahrens erhalten wird.

## Revendications

1. Composition de caoutchouc fluoré comprenant un caoutchouc fluoré contenant un polymère fluoré qui est réticulable par un peroxyde, un agent de réticulation peroxyde et un agent de charge résistant à la chaleur contenant un talc calciné ayant une surface hydrophile,
la composition de caoutchouc fluoré contenant un agent colorant et contenant en plus du noir de carbone à une teneur de 1 partie en poids ou moins rapportée à 100 parties en poids du polymère fluoré, et la teneur du talc calciné étant de 2 à 20 parties en poids, basée sur 100 parties en poids du polymère fluoré.

2. Composition de caoutchouc fluoré selon la revendication 1, dans laquelle le polymère fluoré qui est réticulable par un peroxyde est un terfluoropolymère fluorure de vinylidène / perfluoro (méthy vinyl éther) / tétrafluoroéthylène de type stable à basse température ayant un indice TR 10 de -40 à -25 °C.

3. Procédé de fabrication d'un produit de caoutchouc fluoré, consistant à préparer une matière brute par extrusion de la composition de caoutchouc fluoré non réticulé selon l'une quelconque des revendications 1 ou 2 avec un extrudeur de matière brute, et ultérieurement réticuler la matière brute.

4. Procédé selon la revendication 3, dans lequel le produit de caoutchouc fluoré réticulé présente une résistance à basse température telle qu'elle est définie par un indice TR10 de -25 °C ou moins, une modification de la dureté après 70 heures à 250 °C de +5 points ou moins, et une modification de l'allongement de -10 % ou moins.

5. Produit de caoutchouc fluoré pour les joints toriques, qui est un produit de caoutchouc fluoré réticulé obtenu par le procédé selon la revendication 3 ou 4, destiné à être utilisé comme joints toriques.
